# EUROPÄISCHE PATENTSCHRIFT

(11) **EP 3 695 148 B1**
(45) Veröffentlichungstag und Bekanntmachung des Hinweises auf die Patenterteilung: **29.04.2026**
(21) Anmeldenummer: 18830772.2
(22) Anmeldetag: 17.12.2018
(51) Int. Cl.: G05D 16/10, F16K 11/07

(54) **EINRICHTUNG UND VENTIL ZUR STRÖMUNGSKRAFT-KOMPENSATION**
DEVICE AND VALVE FOR FLOW FORCE COMPENSATION
DISPOSITIF ET SOUPAPE POUR COMPENSATION DE FORCE D'ÉCOULEMENT

(30) Priorität: 21.12.2017 DE 102017012102
(43) Veröffentlichungstag der Anmeldung: 19.08.2020
(73) Patentinhaber: Hydac Fluidtechnik GmbH, 66280 Sulzbach/Saar (DE)
(72) Erfinder: BILL, Markus, 66571 Eppelborn (DE); SCHULZ, Frank, 66440 Blieskastel-Bierbach (DE)
(74) Vertreter: Bartels und Partner, Patentanwälte
(86) Internationale Anmeldenummer: PCT/EP2018/085185
(87) Internationale Veröffentlichungsnummer: WO 2019/121505

(56) Entgegenhaltungen:
- DE-A1- 102016 105 203
- US-A- 3 324 890
- US-A- 4 941 508
- US-A1- 2004 000 347

## Beschreibung

Die Erfindung betrifft ein Proportional-Druckregelventil mit den Merkmalen im Oberbegriff von Anspruch 1.

Eine derartige Einrichtung findet Anwendung in einem Ventil zur Druckversorgung eines hydraulischen Verbrauchers, beispielsweise einer Fahrzeugkupplung oder Fahrzeugbremse, mit einem vorgebbaren Druck. Der zu versorgende hydraulische Verbraucher ist an den Nutzanschluss angeschlossen. Über Steuerbewegungen des Regelkolbens entsprechend des vorgegebenen Drucks wird die Fluidverbindung zwischen der Druckversorgungsanschlussstelle und der Nutzanschlussstelle geöffnet und Fluid von der Druckversorgung zum hydraulischen Verbraucher geleitet.

DE 10 2014 004 796 A1 offenbart ein beispielhaftes Proportional-Druckregelventil mit einem in einem Ventilgehäuse längsverfahrbar geführten Regelkolben, der mittels eines Betätigungssystems zum wahlweisen Verbinden von im Ventilgehäuse vorhandenen Anschlussstellen dient, wie einem Druckversorgungsanschluss, einem Verbraucheranschluss und einem Tank- oder Rücklaufanschluss. Das Betätigungssystem ist in der Art eines Magnetsystems ausgebildet, es sind jedoch auch Betätigungen möglich mittels eines pneumatischen oder sonstigen fluidischen Stelltriebes oder durch ein mechanisches Betätigungssystem.

Auf den Regelvorgang zur Versorgung des hydraulischen Verbrauchers wirken, bedingt durch die anstehenden Drücke und die zu beherrschenden Volumenströme an den Anschlussstellen, auch sog. Strömungskräfte auf den Regelkolben der Einrichtung ein. Diese Strömungskräfte sind regelmäßig durch einen Druckabfall an der zuordenbaren Steuer- oder Regelkante im Gehäuse verursacht, beispielsweise im Bereich vom Druckversorgungsanschluss zum Nutzanschluss. Durch diesen Druckabfall entsteht eine Kraft in Richtung des an die Einrichtung angeschlossenen Betätigungssystems, die den Regelkolben in Richtung seiner Schließstellung zu bewegen sucht, wodurch der eingestellte Druck weiter reduziert wird.

Zur Kompensation der durch Öffnen und Schließen von Steuerkanten unerwünschten Strömungskräfte an einem in einem Ventilgehäuse axial verschiebbaren Regelkolben ist aus DE 10 2016 105 203 A1 eine Einrichtung bekannt. Bei der bekannten Einrichtung weist eine Steuernut zur Kompensation von Strömungskräften, die die Reduzierung oder Eliminierung der Störfaktoren herbeiführt, eine strömungskraftkompensierte Steuerkantengeometrie auf. Hierbei ist im Bereich der Steuerkante am Regelkolben ein absatzartig ausgestaltetes Kompensationselement ausgebildet, wobei durch den Absatz eine ringförmige Strömungsangriffsfläche für Fluid geschaffen ist. Hinsichtlich einer Verbesserung der Strömungskraft-Kompensation lässt die bekannte Lösung noch Wünsche offen.

Weitere Einrichtungen gehen aus der US 3 324 890, der US 4 941 508 und der US 2004/0000347 A1 hervor.

Ausgehend von einer aus dem Stand der Technik bekannten Einrichtung stellt sich die Erfindung die Aufgabe, die Strömungskraft-Kompensation am Regelkolben noch wirkungsvoller auszugestalten und eine individuelle Ausgestaltung der Strömungskraft-Kompensation im Bereich der Steuerkante zu ermöglichen.

Diese Aufgabe wird gelöst durch eine Einrichtung mit den Merkmalen des Patentanspruchs 1 in seiner Gesamtheit. Vorteilhafte Ausgestaltungen der Erfindung sind Gegenstand der Unteransprüche.

Dadurch, dass der Regelkolben an einem freien Ende hohl gebohrt ist, und dass bei einer erfindungsgemäßen Einrichtung die Gestaltsänderung gleichfalls einer Treppenfunktion folgt, deren Funktionsgraph mindestens eine Stufe mehr aufweist als die benötigte Stufenanzahl zur Bildung der Steuerkante, ist die Strömungsangriffsfläche in zumindest zwei Teilflächen entsprechend des Verlaufs der Treppenfunktion unterteilt, wodurch das an der Strömungsangriffsfläche angreifende Fluid eine optimierte Krafteinleitung auf den Regelkolben bewirkt. Durch die einer Treppenfunktion folgende Steuerkante und die gleichfalls einer Treppenfunktion folgende Gestaltsänderung ist in dem Bereich, in dem der Regelkolben die Steuerkante entsprechend der Regelstellungen überfährt, ein Fluidraum geschaffen, in welchen das Fluid zum Angriff an der Strömungsangriffsfläche einströmen und an der Steuerkante vorbeiströmen kann. Entsprechend der Kraftformel F = P x A wird eine Gegenkraft zur Strömungskraft im Betrieb der Einrichtung erzeugt, die den Regelkolben in eine Öffnungsstellung entgegengesetzt zu der Sperrstellung zu ziehen sucht. Die Ausgestaltung des Funktionsgraphen der Treppenfunktion, insbesondere die Anzahl und die Abmessungen der einzelnen Stufen, ermöglicht eine bedarfsgerecht ausgestaltete Strömungskraft-Kompensation an der von dem Funktionsgraphen vorgegebenen Gestaltsänderung.

Bei einer bevorzugten Ausführungsform der erfindungsgemäßen Einrichtung bildet die jeweilige Stufe am Regelkolben eine Ringfläche aus, die konzentrisch zur Längsachse des Regelkolbens sowie senkrecht zu derselben verläuft. Die Ringflächen lassen sich in einfacher Weise am Regelkolben ausbilden und ermöglichen eine gleichmäßige, entlang des kompletten Umfangs des Regelkolbens angreifende Krafteinleitung. Die einzelnen Ringflächen bilden die Strömungsangriffsfläche für das Fluid. Vorzugsweise verlaufen die die Ringflächen miteinander verbindenden Absatzflächen parallel zur Längsachse des Regelkolbens. Es ist jedoch auch vorstellbar, dass die Treppenfunktion einen Verlauf aufweist mit Flächen, die in einem von 90° abweichenden Winkel zueinander angeordnet sind. So ist beispielsweise vorstellbar, dass die Ringflächen gegenüber einer senkrechten Ausrichtung geneigt sind.

Bei einer weiteren bevorzugten Ausführungsform der erfindungsgemäßen Einrichtung sind die einzelnen, benachbarten Ringflächen der Stufen am Regelkolben über Absatzflächen voneinander beabstandet, die konzentrisch zur Längsachse sowie parallel zu derselben verlaufen. Die Treppenfunktion am Regelkolben setzt sich somit aus einer Abfolge von Ringflächen und Absatzflächen zusammen. Parallel zur Längsachse des Regelkolbens verlaufende Absatzflächen ermöglichen ein ungehindertes Anströmen der als Strömungsangriffsfläche dienenden Ringflächen. Es ist jedoch auch vorstellbar, die Absatzflächen von einer parallelen Ausrichtung abweichend am Regelkolben auszubilden, vorzugsweise mit einer geringen Neigung gegenüber einer parallelen Ausrichtung.

Bei einer weiteren bevorzugten Ausführungsform der erfindungsgemäßen Einrichtung ist die jeweilige Ringfläche in Richtung des Außenumfangs des Regelkolbens gesehen kleiner als die sich nach innen hin anschließenden Ringflächen. In dieser Ausführungsform ist die Treppenfunktion nicht regelmäßig ausgebildet und die einzelnen Ringflächen weisen unterschiedliche Erstreckungen in radialer Richtung auf. Die Erstreckung in radialer Richtung der einzelnen Ringflächen nimmt von innen nach außen entlang des Regelkolbens ab, wodurch eine dahingehend verbesserte Strömungskraft-Kompensation erreicht ist, dass das Fluid zunächst an der Ringfläche mit der größten Erstreckung und danach an Ringflächen mit kleinerer Erstreckung angreift und durch den Treppenverlauf an der Gestaltsänderung und der gegenüberliegenden Steuerkante vorbeigeleitet wird.

Weiter ist vorteilhaft, dass die jeweilige Absatzfläche in Richtung des Außenumfangs des Regelkolbens, parallel zur Längsachse desselben gesehen, eine kleinere Höhe aufweist als die zuinnerst liegende Absatzfläche. Durch die unterschiedlichen Höhen der Absatzflächen weisen die Ringflächen zueinander unterschiedliche Abstände, in axialer Richtung gesehen, auf. Je nach Ausgestaltung der Treppenfunktion weisen die Ringflächen gleiche oder unterschiedliche Erstreckung in radialer Richtung und die Absatzflächen gleiche oder unterschiedliche Höhe, respektive Erstreckung in axialer Richtung, auf, wodurch anforderungsgerecht die den Fluidraum vorgebende Gestaltsänderung und die zugehörige Strömungskraft-Kompensation am Regelkolben ausgestaltet werden.

Bei einer weiteren bevorzugten Ausführungsform der erfindungsgemäßen Einrichtung folgt bei mehr als zwei Stufen des Funktionsgraphen der zuäußerst am Regelkolben angeordneten Absatzfläche eine Absatzfläche gleicher Höhe für eine Stufe. Hieraus ergibt sich der Vorteil einer gleichmäßigen Anordnung und Beabstandung der zum Angriff des Fluids zur Strömungskraft-Kompensation dienenden Ringflächen.

Vorzugsweise geht die am Regelkolben zuinnerst angeordnete Absatzfläche in mindestens eine Fluid-Durchlassstelle im Regelkolben über. Über die mindestens eine Fluid-Durchlassstellen wird bei Erreichen, respektive Überfahren, der Steuerkante die zugehörige Fluidverbindung zwischen den Anschlussstellen geöffnet oder gesperrt. Durch den direkten Übergang von der jeweiligen Fluid-Durchlassstelle zur Absatzfläche als Teil der Gestaltsänderung werden weitere möglicherweise störende Fluidströme unterbunden und direkt eine Strömungskraft-Kompensation durch das die Gestaltsänderung erreichende Fluid eingeleitet.

Bei einer bevorzugten Ausführungsform der erfindungsgemäßen Einrichtung ist die Stufe zur Bildung der Steuerkante am Druckversorgungsanschluss durch eine Übergangsstelle zwischen mindestens einer zugehörigen Fluid-Durchlassstelle im Gehäuse und der Innenwand dieses Gehäuses gebildet, entlang deren der Regelkolben verfahrbar geführt ist. Hieraus ergibt sich der Vorteil, dass beim Ansteuern der Fluidverbindung von der Druckquelle zum hydraulischen Verbraucher, respektive vom Druckversorgungsanschluss zum Nutzanschluss, eine als Gegenkraft zur auf den Regelkolben wirkenden Betätigungskraft als Strömungskraft-Kompensation erreicht wird.

Bei einer weiteren bevorzugten Ausführungsform der Erfindung ist in Zusteuerrichtung des Regelkolbens zum Verschließen der jeweiligen Durchlassstelle mit der Steuerkante in seiner einen Verfahrrichtung in dieser Richtung von außen nach innen gesehen die Treppenfolge von Steuerkante und Regelkolben aufsteigend und in der gegenläufigen Verfahrrichtung von innen nach außen gesehen absteigend. Die je nach Verfahrrichtung aufsteigende oder absteigende Treppenfolge von Steuerkante und Regelkolben ist jeweils gleich gewählt, wodurch ein Fluidraum mit im Wesentlichen gleicher Durchströmungsbreite vorgegeben ist. Besonders bevorzugt weisen die an der Steuerkante und dem Regelkolben vorgesehenen Treppenfunktionen den gleichen Funktionsgraphen auf, abgesehen von der mindestens einen weiteren am Regelkolben ausgebildeten Stufe.

Weiter ist vorteilhaft, dass die Stufen am Regelkolben in eine Innenausnehmung am Außenumfang des Regelkolbens einmünden, die am gegenüberliegenden Ende in einer weiteren Stufe ausmündet, die mit einer Steuerkante eines Tankanschlusses zusammenwirkt. Hierdurch wird eine Strömungskraft-Kompensation beim Ansteuern der Fluidverbindung zwischen dem Nutzanschluss und dem Tankanschluss erreicht. Zweckmäßigerweise ist im Bereich der Innenausnehmung eine Fluid-Durchlassstelle am Regelkolben ausgebildet, die einen Fluidweg über eine Mittenausnehmung zum Nutzanschluss vorgibt.

Bei einer bevorzugten Ausführungsform der erfindungsgemäßen Einrichtung ist die Steuerkante am Tankanschluss durch mindestens eine zugehörige Durchlassstelle im Ventilgehäuse gebildet. Vorzugsweise sind der Druckversorgungsanschluss und der Tankanschluss radial außen am Ventilgehäuse angeordnet, besonders bevorzugt über kreisringförmig angeordnete Durchlassstellen ausgebildet, und der Nutzanschluss ist vorzugsweise an einem axialen Ende des Ventilgehäuses ausgebildet.

Bei einer weiteren bevorzugten Ausführungsform der erfindungsgemäßen Einrichtung entspricht die Länge der Innenausnehmung, parallel zur Längsachse des Regelkolbens gesehen, dem direkten Abstand zweier benachbarter Steuerkanten von Druckversorgungsanschluss und Tankanschluss. Hieraus ergibt sich der Vorteil eines mit kurzen Steuerbewegungen des Regelkolbens erreichbaren Öffnens und Schließens der Fluidverbindungen. Die am Regelkolben ausgebildete Innenausnehmung dient als Teil der über die Steuerkante anzusteuernden Fluidverbindung zwischen der Tank- und der Nutzanschlussstelle.

Vorteilhafterweise mündet in die Innenausnehmung am Regelkolben mindestens eine weitere Fluid-Durchlassstelle ein, die über eine Mittenausnehmung im Regelkolben mit der einen mindestens einen Fluid-Durchlassstelle in demselben fluidführend in Verbindung steht. Über die Mittenausnehmung erreicht das Fluid entsprechend der Regelstellung des Regelkolbens den Druckversorgungsanschluss oder den Tankanschluss.

Weiter ist vorteilhaft, dass an die jeweils weitere Fluid-Durchlassstelle eine Blendeneinrichtung im Regelkolben angeschlossen ist, die die Mittenausnehmung des Regelkolbens, die permanent fluidführend an den Nutzanschluss im Ventilgehäuse angeschlossen ist, mit einer weiteren Mittenausnehmung im Regelkolben fluidführend verbindet, in die zumindest teilweise eine Steuereinrichtung für den Regelkolben eingreift. Hieraus ergibt sich der Vorteil eines kompakten Aufbaus des Regelkolbens mit den darin ausgebildeten Fluidverbindungen und der Steuereinrichtung.

Weiter ist vorteilhaft, dass der Regelkolben außerhalb der Innenausnehmung und der Gestaltsunregelmäßigkeit mit der Treppenfunktion einen gleichen Außendurchmesser aufweist, der vorzugsweise von eingebrachten Dicht- und/oder Führungsbändern unterbrochen ist. Der zylinderförmige Regelkolben ist in einer zylinderförmigen Bohrung im Gehäuse längsverfahrbar geführt und steuert die im Gehäuse ausgebildeten Anschlussstellen an.

Vorzugsweise sind eine Druckversorgungsanschlussstelle und eine Tankanschlussstelle radial in das Ventilgehäuse eingebracht und eine Nutzanschlussstelle am axialen Ende des Ventilgehäuses ausgebildet. Durch die Einrichtung zur Strömungskraft-Kompensation ist sichergestellt, dass der zur Versorgung des hydraulischen Verbrauchers vorgegebene Druck ohne störende, den Regelkolben in seine Sperrstellung ziehende Strömungskräfte aufrechterhalten wird.

Weitere Vorteile und Merkmale der Erfindung ergeben sich aus den Figuren und der nachfolgenden Beschreibung der Zeichnung. Die vorstehend genannten und die weiter angeführten Merkmale können jeweils einzeln oder in beliebigen Kombinationen an einer erfindungsgemäßen Einrichtung sowie einem erfindungsgemäßen Ventil realisiert sein. Die in den Figuren gezeigten Merkmale sind rein schematisch und nicht maßstäblich zu verstehen. Es zeigen:
- Fig. 1a: einen Längsschnitt durch ein beispielhaftes, erfindungsgemäß ausgestaltetes Ventil;
- Fig. 1b: die Ausgestaltung der zur Strömungskraft-Kompensation eingesetzten Gestaltsänderung in vergrößerter Darstellung;
- Fig. 2a: einen Teil eines Gehäuses des Ventils nach der Fig. 1a mit der erfindungsgemäßen Einrichtung zur Strömungskraft-Kompensation in einem Längsschnitt;
- Fig. 2b: die Ausgestaltung einer zur Strömungskraft-Kompensation eingesetzten Gestaltsänderung in vergrößerter Darstellung;
- Fig. 2c: eine alternative Ausgestaltung der zur Strömungskraft-Kompensation eingesetzten Gestaltsänderung in vergrößerter Darstellung ähnlich der Lösung nach der Fig. 1b;
- Fig. 3a: ein weiteres Ausführungsbeispiel einer erfindungsgemäßen Einrichtung zur Strömungskraft-Kompensation in teilweise perspektivischer Darstellung, gezeigt an einem Regelkolben, wie er bei dem Ventil nach der Fig. 1a verwendet ist;
- Fig. 3b: die Ausgestaltung der zur Strömungskraft-Kompensation eingesetzten Gestaltsänderung nach der Fig. 3a in vergrößerter Darstellung; und
- Fig. 3c: eine alternative Ausgestaltung der zur Strömungskraft-Kompensation eingesetzten Gestaltsänderung in vergrößerter Darstellung, wie sie bei einem Regelkolben nach der Fig. 3a eingesetzt ist.

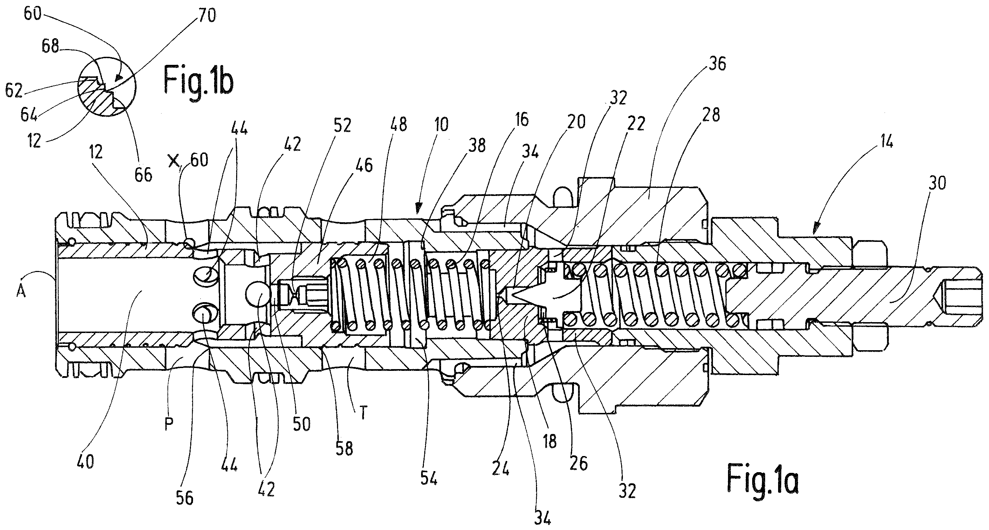

Fig. 1a zeigt im Längsschnitt ein als 3-Wege-Proportional-Druckregelventil ausgebildetes Ventil mit einem in einem Ventilgehäuse 10 längsverfahrbar geführten Regelkolben 12. Der eine Ventilvorsteuerung 14 aufweisende Regelkolben 12 dient zum wahlweisen Verbinden von im Ventilgehäuse 10 ausgebildeten Anschlussstellen, einer Druckversorgungsanschlussstelle P, einer Nutzanschlussstelle A und einer Tankanschlussstelle T. Die Nutzanschlussstelle A ist in Blickrichtung auf Fig. 1a gesehen am linken Ende in axialer Längsrichtung in das Ventilgehäuse 10 eingebracht. Die Druckversorgungsanschlussstelle P und die Tankanschlussstelle T sind jeweils in Form von einzelnen, kreisringförmig angeordneten Bohrungen radial in das Ventilgehäuse 10 eingebracht. Der Regelkolben 12 stützt sich gegen eine erste Druckfeder 16 ab, die als Energiespeicher fungiert. Dabei stützt sich die erste Druckfeder 16 mit ihrem einen freien Ende am Regelkolben 12 ab, der an diesem Ende hohl gebohrt ist. Mit ihrem anderen Ende stützt sich die erste Druckfeder 16 in der Ausnehmung eines Blendensitzkörpers 18 ab. Der stationär im Ventilgehäuse 10 angeordnete Blendensitzkörper 18 weist eine Längsbohrung 20 auf, die an ihrem einen Ende einen Ventilsitz für einen Sitzkegel 22 bildet, wobei am gegenüberliegenden Ende eine Dämpfungsblende 24 vorgesehen ist. Der Sitzkegel 22 ist zwischen einer zweiten 26 und einer dritten Druckfeder 28 mit unterschiedlichen Federsteifigkeiten eingespannt, wobei die Federspannung der dritten Druckfeder 28 über einen Spindeltrieb 30 einstellbar ist. Hebt der Sitzkegel 22 von dem Blendensitzkörper 18 entgegen der dritten Druckfeder 28, bedingt durch die Druckverhältnisse im Ventil und unterstützt von der zweiten Druckfeder 26 von seinem Vorsteuersitz ab, wird eine fluidführende Verbindung von der Dämpfungsblende 24 über den Vorsteuersitz in Querkanäle 32 im Blendensitzkörper 18 geöffnet. Die Querkanäle 32 gehen in mindestens einen Längskanal 34 über, der zur Tankanschlussstelle T führt. Zur Bildung des jeweiligen Längskanals 34 ist das Ventilgehäuse 10 von einem patronenartigen zusätzlichen Gehäuseteil 36 umfasst. In Abhängigkeit von der Druckeinstellung über die mechanische Ventilvorsteuerung 14 öffnet jedenfalls das Druckbegrenzungsventil zur Tankanschlussstelle T hin, sobald ein vorgebbarer Druck-Schwellenwert überschritten ist, um dergestalt den hydraulischen Kreis mit den dort angeschlossenen Arbeitsmaschinen und Geräten vor schädigenden Druckspitzen oder einer entsprechenden schädigenden Druckerhöhung zu schützen.

Über den sich an der ersten Druckfeder 16 abstützenden Regelkolben 12 ist der Nutzanschluss A gemäß der Darstellung der Fig. 1a mit der Druckversorgungsanschlussstelle P fluidführend verbunden oder bei einer Verfahrung des Regelkolbens 12 in Längsrichtung in mindestens eine weitere Regelstellung, bei der dieser in Richtung eines Anschlags 38 im Ventilgehäuse 10 verfährt, mit der Tankanschlussstelle T verbunden. Hierfür weist der Regelkolben 12 eine Mittenausnehmung 40 auf, welche sich vom der Nutzanschlussstelle A zugeordneten Ende des Regelkolbens 12 bis zu den ringförmig am Regelkolben 12 angeordneten Fluid-Durchlassstellen 42 erstreckt. Die Fluid-Durchlassstellen 42 dienen in der jeweils weiteren Regelstellung des Regelkolbens 12 einer Fluidverbindung von der Nutzanschlussstelle A zur Tankanschlussstelle T. Von den Fluid-Durchlassstellen 42 aus in Richtung der Nutzanschlussstelle A versetzt sind weitere Fluid-Durchlassstellen 44 am Regelkolben 12 ausgebildet, welche in der in Fig. 1a gezeigten Regelstellung des Regelkolbens 12 der Fluidverbindung von der Nutzanschlussstelle A zur Druckversorgungsanschlussstelle P dienen. An die Mittenausnehmung 40 des Regelkolbens 12 schließen sich ein Verbindungsteil 46 und eine weitere Mittenausnehmung 48 an, in welche die erste Druckfeder 16 eingreift. In das Verbindungsteil 46 des Regelkolbens 12 ist eine weitere Längsbohrung 50 eingebracht. In die weitere Längsbohrung 50 ist eine Blendeneinrichtung 52 eingesetzt, so dass in jeder Verfahrstellung des Regelkolbens 12 eine fluidführende Verbindung zwischen der Mittenausnehmung 40, die sich an die Nutzanschlussstelle A anschließt, und der weiteren Mittenausnehmung 48, die sich an einen Innenraum 54 zwischen dem Regelkolben 12 und dem Blendensitzkörper 18 anschließt, gewährleistet ist.

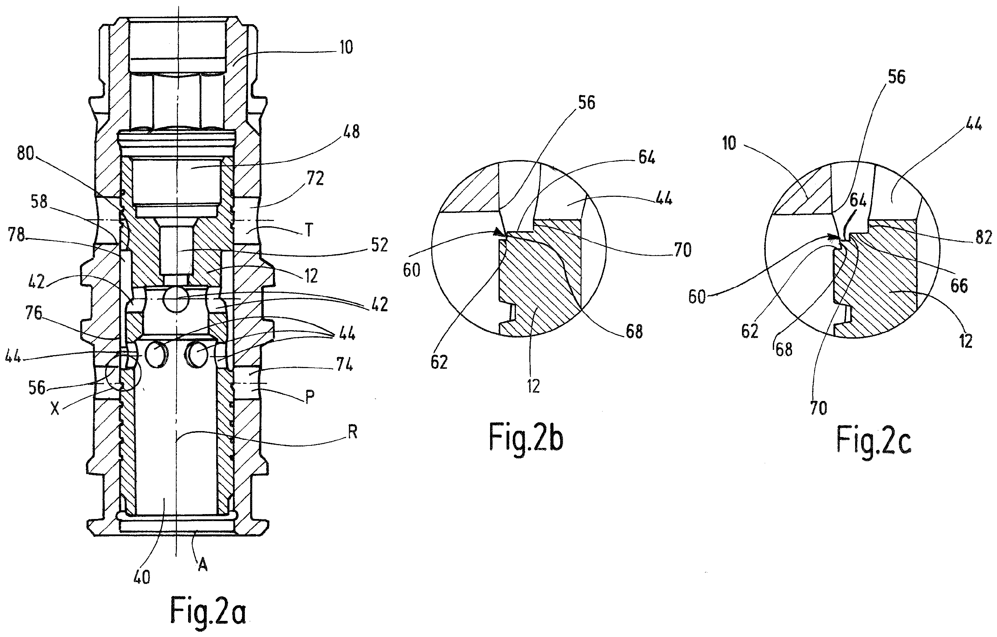

Zum Ansteuern der Druckversorgungsanschlussstelle P überfährt der Regelkolben 12 eine Steuerkante 56, welche am Ventilgehäuse 10 ausgebildet ist. Zum Ansteuern der Tankanschlussstelle T überfährt der Steuerkolben 12 eine weitere Steuerkante 58, welche ebenfalls am Ventilgehäuse 10 ausgebildet ist. Im Bereich der Steuerkante 56 des Ventilgehäuses 10 weist der Regelkolben 12 eine Gestaltsänderung 60 von seiner sonstigen äußeren, im gezeigten Ausführungsbeispiel zylinderförmigen, Grundform auf. Die Ausgestaltung der Gestaltsänderung 60 im Detail ist der Fig. 1b zu entnehmen, welche den in Fig. 1a mit X gekennzeichneten Bereich in 10-facher Vergrößerung zeigt. Die Gestaltsänderung 60 folgt einer Treppenfunktion, deren Funktionsgraph drei Stufen und somit zwei Stufen mehr als die einstufig ausgebildete Steuerkante 56 aufweist. Die Stufen bilden am Regelkolben 12 eine erste Ringfläche 62, eine zweite Ringfläche 64 und eine dritte Ringfläche 66 aus, die jeweils konzentrisch zur Längsachse R (vgl. Fig. 2a) des Regelkolbens 12 sowie senkrecht zu derselben verlaufen. Die einzelnen, benachbarten Ringflächen 62, 64, 66 sind über eine erste Absatzfläche 68 und eine zweite Absatzfläche 70 voneinander beabstandet, die konzentrisch zur Längsachse R (vgl. Fig. 2a) des Regelkolbens 12 sowie parallel zu derselben verlaufen. Die vom Außenumfang des Regelkolbens 12 aus erste Ringfläche 62 und die zweite Ringfläche 64 weisen in etwa die gleiche radiale Erstreckung auf, wohingegen die dritte Ringfläche 66 eine größere radiale Erstreckung aufweist. Die beiden Absatzflächen 68 und 70 weisen in Richtung des Außenumfangs des Regelkolbens 12 gesehen in etwa die gleiche Höhe auf. Bei dieser besonderen Ausgestaltung der Gestaltsänderung 60 greift das Fluid zur Strömungskraft-Kompensation an Ringflächen 62 bis 66 mit unterschiedlicher radialer Erstreckung an, wodurch eine optimierte Krafteinleitung auf den Regelkolben 12 und eine gute Fluidleitung durch den von der Gestaltsänderung 60 vorgegebenen Fluidraum, an der Steuerkante 56 vorbei, gewährleistet ist. Besonders bevorzugt ist die radiale Erstreckung der einzelnen Ringflächen 62 bis 66 derart gewählt, dass die unterschiedlichen Durchmesser aufweisenden Ringflächen 62 bis 66 jeweils die gleiche Fläche haben.

Fig. 2a zeigt einen Längsschnitt durch ein Ventilgehäuse 10 einer erfindungsgemäß ausgestalteten Einrichtung, wie es Bestandteil des Ventils nach der Fig. 1a ist, mit dem längsverfahrbar in dem Gehäuse 10 verfahrbaren Regelkolben 12. Das Ventilgehäuse 10 weist insgesamt drei Anschlussstellen für Fluid auf, die axial in das Ventilgehäuse 10 eingebrachte Nutzanschlussstelle A sowie radial am Ventilgehäuse 10 ausgebildet die Druckversorgungsanschlussstelle P und die Tankanschlussstelle T. Die Steuerkanten 56, 58 der Druckversorgungsanschlussstelle P und der Tankanschlussstelle T sind jeweils durch mehrere radial eingebrachte Durchlassstellen 72, 74 im Ventilgehäuse 10 gebildet. Die der Tankanschlussstelle T zugeordneten Durchlassstellen 72 sind entlang eines Kreisringes am Ventilgehäuse 10 angeordnet, ebenso die der Druckversorgungsanschlussstelle P zugeordneten weiteren Durchlassstellen 74. Die jeweilige Stufe zur Bildung der Steuerkante 56 an der Druckversorgungsanschlussstelle P ist durch eine Übergangsstelle zwischen den weiteren Durchlassstellen 74 im Ventilgehäuse 10 und der Innenwand 76 des Ventilgehäuses 10 gebildet, entlang deren der Regelkolben 12 verfahrbar geführt ist.

Wie die vergrößerte Darstellung der Fig. 2b zeigt, ist die Steuerkante 56 einstufig und die Gestaltsänderung 60 am Regelkolben 12 zweistufig ausgebildet. Die radial außenliegende erste Ringfläche 62 weist eine kleinere Erstreckung in radialer Richtung auf als die benachbarte zweite Ringfläche 64. Die konzentrisch zur Längsachse R des Regelkolbens 12 sowie senkrecht zu derselben verlaufenden Ringflächen 62, 64 sind über eine erste Absatzfläche 68, die konzentrisch zur Längsachse R sowie parallel zu derselben verläuft, voneinander beabstandet. An die zweite Ringfläche 64 schließt sich die zweite Absatzfläche 70 an, die in die weitere Fluid-Durchlassstelle 44 im Regelkolben 12 übergeht. Durch die weiteren Fluid-Durchlassstellen 44 wird bei Überfahren der Steuerkante 56 durch den Regelkolben 12 die Fluidverbindung von der Druckversorgungsanschlussstelle P über die Innenausnehmung 78 des Regelkolbens 12 zur Nutzanschlussstelle A freigegeben. Entsprechend wird bei Überfahren der weiteren Steuerkante 58 durch den Regelkolben 12 die Fluidverbindung von der Nutzanschlussstelle A über die Mittenausnehmung 40 und Fluid-Durchlassstellen 42, 44 zur Tankanschlussstelle T freigegeben.

Die Stufen der Gestaltsänderung 60 am Regelkolben 12 münden in eine Innenausnehmung 78 des Regelkolbens 12 ein, die der Innenwand 76 des Ventilgehäuses 10 radial gegenüberliegend angeordnet ist und die am axial gegenüberliegenden Ende in einer weiteren Stufe 80 ausmündet, die mit der weiteren Steuerkante 58 des Tankanschlusses T zusammenwirkt.

In Richtung der Längsachse R ist an die jeweilige Fluid-Durchlassstelle 42 die Blendeneinrichtung 52 im Regelkolben 12 angeschlossen, die in Fig. 1a dargestellt und der Einfachheit halber in Fig. 2a nicht dargestellt ist und die die permanent fluidführend an den Nutzanschluss A im Ventilgehäuse 10 angeschlossene Mittenausnehmung 40 des Regelkolbens 12 mit der weiteren Mittenausnehmung 48 im Regelkolben 12 fluidführend verbindet. In die weitere Mittenausnehmung 48 im Regelkolben 12 greift eine in Fig. 2a nicht näher gezeigte Steuereinrichtung für den Regelkolben 12 ein. Die Steuereinrichtung ist vorzugsweise Teil eines nicht dargestellten Magnetsystems, es sind jedoch auch Betätigungen möglich mittels eines pneumatischen oder sonstigen fluidischen Stelltriebs sowie ein mechanisches Betätigungssystem.

Eine alternative Ausgestaltung einer Gestaltsänderung 60 mit drei Stufen ist in Fig. 2c gezeigt. Eine erste Ringfläche 62, eine zweite Ringfläche 64 und eine dritte Ringfläche 66 sind über eine erste Absatzfläche 68 und eine zweite Absatzfläche 70 voneinander beabstandet, wobei eine dritte Absatzfläche 82 in die weitere Fluid-Durchlassstelle 44 übergeht. Hierbei weist die radial innenliegende, dritte Ringfläche 66 die größte Erstreckung in radialer Richtung auf.

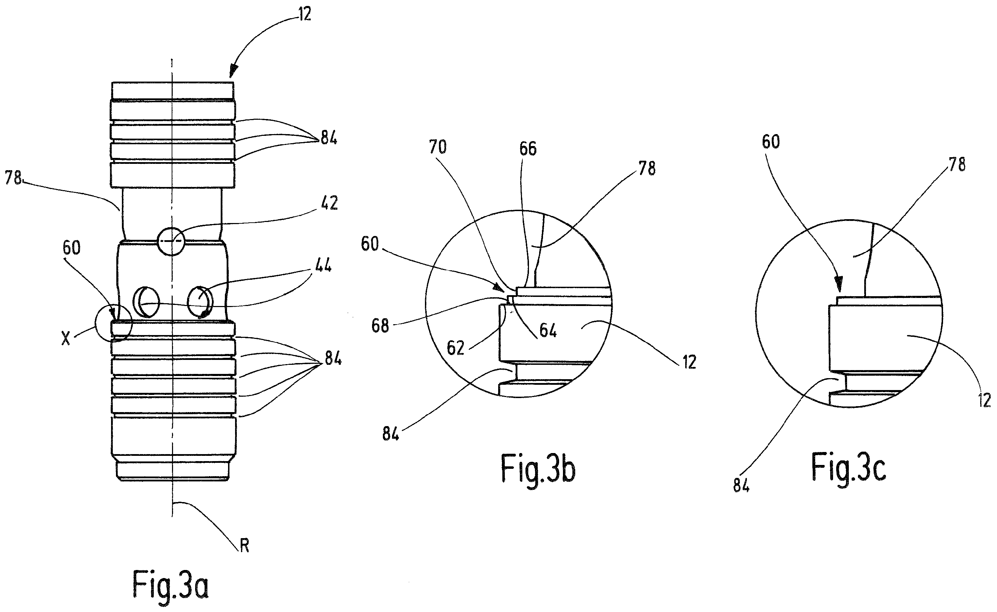

Fig. 3a zeigt in perspektivischer Seitenansicht den rotationssymmetrisch zur Längsachse R ausgebildeten Regelkolben 12 mit den darin ausgebildeten Fluid-Durchlassstellen 42, 44 im Bereich der Innenausnehmung 78. In Fig. 3a ist gut erkennbar, dass der Regelkolben 12 außerhalb der Innenausnehmung 78 und der benachbart zu den weiteren Fluid-Durchlassstellen 44 angeordneten Gestaltsänderung 60 mit der Treppenfunktion einen gleichen Außendurchmesser aufweist, der von radial umlaufenden Einschnürungen 84 unterbrochen ist, die Druckentlastungsnuten darstellen. An dem der Nutzanschlussstelle A zugeordneten, in Fig. 3a unten gezeigten Ende ist der Regelkolben 12 verjüngt. Die Einschnürungen 84 sind in regelmäßigen axialen Abständen am Außenumfang des Regelkolbens 12 ausgebildet.

In Fig. 3b ist die Ausgestaltung der einer Treppenfunktion folgenden Gestaltsänderung 60 im Detail dargestellt. Bei der 3-stufigen Gestaltsänderung 60 weisen die erste Ringfläche 62, die erste Absatzfläche 68, die zweite Ringfläche 64 und die zweite Absatzfläche 70 jeweils die gleiche Erstreckung in radialer bzw. axialer Richtung auf. Die dritte Ringfläche 66 ist in Richtung des Außenumfangs des Regelkolbens 12 gesehen größer als die sich nach außen hin anschließenden Ringflächen 62, 64. Der Darstellung der Fig. 3b ist neben der Einschnürung 84 im Regelkolben 12 weiter gut entnehmbar, dass der Regelkolben 12 im Bereich der Innenausnehmung 78 in der Zeichnung eine leichte Einwölbung aufweist, die sich aus der grafischen Darstellung ergibt, wenn eine Bohrung an der Stelle eines Absatzes eingebracht ist.

Die in Fig. 3c dargestellte alternative Ausgestaltung der Gestaltsänderung 60 unterscheidet sich von der in Fig. 3b gezeigten Ausgestaltung dadurch, dass eine Stufe und somit eine Ringfläche und eine Absatzfläche weniger vorgesehen sind, so dass vom Außenumfang des Regelkolbens 12 aus eine erste Ringfläche 62, eine erste Absatzfläche 68 und eine zweite Ringfläche 64 mit größerer radialer Erstreckung gegenüber der ersten Ringfläche 62 ausgebildet sind.

Unterschiedliche Anforderungen an die Strömungskraft-Kompensation sind auf unterschiedliche Viskosität des eingesetzten Fluids, die Betriebstemperatur und die eingesetzten Drücke sowie die Auslegung des im Ventilgehäuse 10 verfahrbar angeordneten Regelkolbens 12 zurückzuführen. Die in den Fig. 1b, 2b, 2c, 3b und 3c gezeigten unterschiedlichen Ausgestaltungen der Gestaltsänderung 60 am Regelkolben 12 ermöglichen eine an die jeweilige Regelsituation angepasste, optimierte Strömungskraft-Kompensation über die Ringflächen 62 bis 66, welche jeweils zusammengesetzt die Strömungsangriffsfläche für das Fluid bilden. Beim Überfahren der zugeordneten Steuerkante 56 ist entsprechend der die Gestaltsänderung 60 vorgebenden Treppenfunktion ein Durchströmraum für Fluid gebildet. In den gezeigten Ausführungsbeispielen ist die Steuerkante 56 jeweils einstufig ausgebildet, es sind jedoch auch Treppenfunktionen mit mehr als einer Stufe an der Steuerkante 56 vorstellbar. Durch unterschiedliche radiale und axiale Erstreckungen der Ringflächen 62 bis 66 sowie der Absatzflächen 68, 70, 82 sind unterschiedliche Funktionsgraphen der Treppenfunktion vorgegeben und neben einem abweichenden Angriff des anströmenden Fluids ist ein unterschiedliches Durchströmungsverhalten an der Gestaltsänderung 60 sowie der Steuerkante 56 vorbei erreicht.

## Patentansprüche

1. Proportional-Druckregelventil, das einen Verbraucher mit einem vorgebbaren Verbraucherdruck versorgt und vorzugsweise an ein hydraulisches Antriebssystem anschließbar ist, umfassend ein Ventilgehäuse (10) mit mindestens zwei Fluidanschlüssen (A, P, T), eine Steuereinrichtung, um einen Regelkolben (12) zwischen den einzelnen Regelstellungen zu bewegen, und eine Einrichtung, bestehend aus dem Regelkolben (12), der in dem Gehäuse (10) längsverfahrbar geführt ist, das die mindestens zwei Anschlussstellen (A, P, T) für Fluid aufweist, und der mit einer, einer Treppenfunktion folgenden Steuerkante (56) des Gehäuses (10) an einer Druckversorgungsanschlussstelle (P) zusammenwirkt, die eine andere, als Nutzanschluss dienende Anschlussstelle (A) in Regelstellungen des Regelkolbens (12) mit Fluid über eine Fluidverbindung mit vorgebbarem Druck versorgt und dabei aufgrund von auftretenden Strömungskräften in Richtung einer diese Fluidverbindung sperrenden Schließstellung zu ziehen sucht, wobei für eine Strömungskraft-Kompensation der Regelkolben (12) im Bereich der Steuerkante (56) des Gehäuses (10) derart eine Gestaltsänderung (60) von seiner sonstigen äußeren Grundform aufweist, dass eine Strömungsangriffsfläche für Fluid geschaffen ist, die eine entgegen der Strömungskraft wirkende, kompensierende Krafteinleitung auf den Regelkolben (12) bewirkt, die den Regelkolben (12) in eine Öffnungsstellung entgegengesetzt zu der Sperrstellung zu ziehen sucht, wobei sich eine erste Druckfeder (16) mit ihrem einen freien Ende am Regelkolben (12) abstützt,
**dadurch gekennzeichnet,**
**dass** der Regelkolben (12) an diesem Ende hohl gebohrt ist, und dass die Gestaltsänderung (60) gleichfalls einer Treppenfunktion folgt, deren Funktionsgraph mindestens eine Stufe mehr aufweist als die benötigte Stufenanzahl zur Bildung der Steuerkante (56).

2. Proportional-Druckregelventil nach Anspruch 1, **dadurch gekennzeichnet, dass** die jeweilige Stufe am Regelkolben (12) eine Ringfläche (62, 64, 66) ausbildet, die konzentrisch zur Längsachse (R) des Regelkolbens (12) sowie senkrecht zu derselben verläuft.

3. Proportional-Druckregelventil nach Anspruch 1 oder 2, **dadurch gekennzeichnet, dass** die einzelnen, benachbarten Ringflächen (62, 64, 66) der Stufen am Regelkolben (12) über Absatzflächen (68, 70) voneinander beabstandet sind, die konzentrisch zur Längsachse (R) sowie parallel zu derselben verlaufen.

4. Proportional-Druckregelventil nach einem der vorstehenden Ansprüche, **dadurch gekennzeichnet, dass** die jeweilige Ringfläche (62, 64, 66) in Richtung des Außenumfangs des Regelkolbens (12) gesehen kleiner gleich ist als die sich jeweils nach innen hin anschließenden Ringflächen (62, 64, 66).

5. Proportional-Druckregelventil nach einem der vorstehenden Ansprüche, **dadurch gekennzeichnet, dass** die jeweilige Absatzfläche (68, 70) in Richtung des Außenumfangs des Regelkolbens (12), parallel zur Längsachse (R) desselben gesehen, eine kleinere oder dieselbe Höhe aufweist als die zuinnerst liegende Absatzfläche (82).

6. Proportional-Druckregelventil nach einem der vorstehenden Ansprüche, **dadurch gekennzeichnet, dass** bei mehr als zwei Stufen des Funktionsgraphen der zuäußerst am Regelkolben (12) angeordneten Absatzfläche (68) eine Absatzfläche (70) gleicher Höhe für eine Stufe folgt.

7. Proportional-Druckregelventil nach einem der vorstehenden Ansprüche, **dadurch gekennzeichnet, dass** die am Regelkolben (12) zuinnerst angeordnete Absatzfläche (82) in mindestens eine Fluid-Durchlassstelle (44) im Regelkolben (12) übergeht.

8. Proportional-Druckregelventil nach einem der vorstehenden Ansprüche, **dadurch gekennzeichnet, dass** die Stufe zur Bildung der Steuerkante (56) am Druckversorgungsanschluss (P) durch eine Übergangsstelle zwischen mindestens einer zugehörigen Durchlassstelle (74) im Gehäuse (10) und der Innenwand (76) dieses Gehäuses (10) gebildet ist, entlang deren der Regelkolben (12) verfahrbar geführt ist.

9. Proportional-Druckregelventil nach Anspruch 8, **dadurch gekennzeichnet, dass** in Zusteuerrichtung des Regelkolbens (12) zum Verschließen der jeweiligen Durchlassstelle (74) mit der Steuerkante (56) in seiner einen Verfahrrichtung in dieser Richtung von außen nach innen gesehen die Treppenfolge von Steuerkante (56) und Gestaltsänderung (60) am Regelkolben (12) aufsteigend und in der gegenläufigen Verfahrrichtung von innen nach außen gesehen absteigend ist.

10. Proportional-Druckregelventil nach einem der vorstehenden Ansprüche, **dadurch gekennzeichnet, dass** die Stufen der Gestaltsänderung (60) am Regelkolben (12) in eine Innenausnehmung (78) am Außenumfang des Regelkolbens (12) einmünden, die am gegenüberliegenden Ende in einer weiteren Stufe (80) ausmündet, die mit einer Steuerkante (58) eines Tankanschlusses (T) zusammenwirkt.

11. Proportional-Druckregelventil nach Anspruch 10, **dadurch gekennzeichnet, dass** die Steuerkante (58) am Tankanschluss (T) durch mindestens eine zugehörige Durchlassstelle (72) im Ventilgehäuse (10) gebildet ist.

12. Proportional-Druckregelventil nach Anspruch 10 oder 11, **dadurch gekennzeichnet, dass** die Länge der Innenausnehmung (78), parallel zur Längsachse (R) des Regelkolbens (12) gesehen, dem direkten Abstand zweier benachbarter Steuerkanten (56, 58) von Druckversorgungsanschluss (P) und Tankanschluss (T) entspricht.

13. Proportional-Druckregelventil nach einem der Ansprüche 10 bis 12, **dadurch gekennzeichnet, dass** in die Innenausnehmung (78) am Regelkolben (12) mindestens eine weitere Fluid-Durchlassstelle (42) einmündet, die über eine Mittenausnehmung (40) im Regelkolben (12) mit der einen mindestens einen Fluiddurchlassstelle (44) in demselben fluidführend in Verbindung steht.

14. Proportional-Druckregelventil nach Anspruch 13, **dadurch gekennzeichnet, dass** an die jeweils weitere Fluid-Durchlassstelle (42) eine Blendeneinrichtung (52) im Regelkolben (12) angeschlossen ist, die die Mittenausnehmung (40) des Regelkolbens (12), die permanent fluidführend an den Nutzanschluss (A) im Ventilgehäuse (10) angeschlossen ist, mit einer weiteren Mittenausnehmung (48) im Regelkolben (12) fluidführend verbindet, in die zumindest teilweise eine Steuereinrichtung für den Regelkolben (12) eingreift.

15. Proportional-Druckregelventil nach einem der Ansprüche 10 bis 14, **dadurch gekennzeichnet, dass** der Regelkolben (12) außerhalb der Innenausnehmung (78) und der Gestaltsänderung (60) mit der Treppenfunktion einen gleichen Außendurchmesser aufweist, der vorzugsweise von eingebrachten Dicht- und/oder Führungsbändern unterbrochen ist.

## Claims

1. Proportional pressure control valve which supplies a consumer with a predefinable consumer pressure and which preferably can be connected to a hydraulic drive system, comprising a valve housing (10) having at least two fluid ports (A, P, T), a control device for moving a control piston (12) between the individual control positions, and a device consisting of the control piston (12), which is guided so as to be longitudinally displaceable in the housing (10) having the at least two connection points (A, P, T) for fluid, and which interacts with a control edge (56), which follows a step function, of the housing (10) at a pressure supply connection point (P), which supplies a different connection point (A), serving as a work port, with fluid at a predefinable pressure via a fluid connection in control positions of the control piston (12) and, in the process, owing to flow forces that arise, attempts to pull it towards a closed position that shuts off said fluid connection, wherein, for the purpose of flow force compensation, the control piston (12) has such a shape change (60) in the region of the control edge (56) of the housing (10) compared with its otherwise external basic shape that a flow impact surface for fluid is created, which flow impact surface causes force to be applied to the control piston (12) in a compensatory manner counter to the flow force, and this application of force attempts to pull the control piston (12) into an open position in the opposite direction to the shut-off position, wherein a first compression spring (16) is supported, by a free end, on the control piston (12), **characterised in that** the control piston (12) has a hollow bore at said end, and **in that** the shape change (60) likewise follows a step function, the function graph of which has at least one more step than the number of steps required for forming the control edge (56).

2. Proportional pressure control valve according to claim 1, **characterised in that** each step on the control piston (12) forms an annular surface (62, 64, 66) that runs concentrically with the longitudinal axis (R) of the control piston (12) and perpendicularly thereto.

3. Proportional pressure control valve according to claim 1 or claim 2, **characterised in that** the individual adjacent annular surfaces (62, 64, 66) of the steps on the control piston (12) are spaced apart from one another by means of shoulder surfaces (68, 70) that run concentrically with the longitudinal axis (R) and in parallel therewith.

4. Proportional pressure control valve according to any of the preceding claims, **characterised in that**, when viewed in the direction of the external circumference of the control piston (12), each annular surface (62, 64, 66) is smaller than or the same as the respective inwardly adjoining annular surfaces (62, 64, 66).

5. Proportional pressure control valve according to any of the preceding claims, **characterised in that**, when viewed in parallel with the longitudinal axis (R) of the control piston (12), each shoulder surface (68, 70) has, in the direction of the external circumference of said control piston, a smaller height than or the same height as the innermost shoulder surface (82).

6. Proportional pressure control valve according to any of the preceding claims, **characterised in that**, when the function graph of the shoulder surface (68) arranged outermost on the control piston (12) has more than two steps, a shoulder surface (70) of the same height comes thereafter for one step.

7. Proportional pressure control valve according to any of the preceding claims, **characterised in that** the shoulder surface (82) arranged innermost on the control piston (12) merges into at least one fluid passage point (44) in the control piston (12).

8. Proportional pressure control valve according to any of the preceding claims, **characterised in that** the step for forming the control edge (56) at the pressure supply port (P) is formed by a transition point between at least one associated passage point (74) in the housing (10) and the internal wall (76), along which the control piston (12) is displaceably guided, of that housing (10).

9. Proportional pressure control valve according to claim 8, **characterised in that**, in the direction in which the control piston (12) travels in order to close the relevant passage point (74) together with the control edge (56) in one displacement direction of the control piston, the sequence of steps of the control edge (56) and shape change (60) on the control piston (12) rises in said direction when viewed from the outside in and falls in the opposite displacement direction when viewed from the inside out.

10. Proportional pressure control valve according to any of the preceding claims, **characterised in that** the steps of the shape change (60) on the control piston (12) open into an internal recess (78) on the external circumference of the control piston (12), said internal recess opening out at the opposite end in a further step (80) that interacts with a control edge (58) of a tank port (T).

11. Proportional pressure control valve according to claim 10, **characterised in that** the control edge (58) on the tank port (T) is formed by at least one associated passage point (72) in the valve housing (10).

12. Proportional pressure control valve according to claim 10 or claim 11, **characterised in that**, when viewed in parallel with the longitudinal axis (R) of the control piston (12), the length of the internal recess (78) is equal to the direct distance between two adjacent control edges (56, 58) of the pressure supply port (P) and the tank port (T).

13. Proportional pressure control valve according to any of claims 10 to 12, **characterised in that** at least one further fluid passage point (42) opens into the internal recess (78) on the control piston (12) and is in fluid communication with the at least one fluid passage point (44) in the control piston (12) by means of a central recess (40) in said control piston.

14. Proportional pressure control valve according to claim 13, **characterised in that** an orifice device (52) in the control piston (12) is connected to each further fluid passage point (42) and brings the central recess (40) of the control piston (12), which central recess is in permanent fluid communication with the work port (A) in the valve housing (10), into fluid communication with a further central recess (48) in the control piston (12), in which further central recess a control device for the control piston (12) engages at least in part.

15. Proportional pressure control valve according to any of claims 10 to 14, **characterised in that**, outside the internal recess (78) and the shape change (60) having the step function, the control piston (12) has the same external diameter, which is preferably broken up by sealing strips and/or guide strips installed therein.

## Revendications

1. Soupape de réglage de la pression proportionnelle,
qui alimente un consommateur en une pression de consommateur pouvant être donnée à l'avance et qui peut être raccordée, de préférence à un système hydraulique d'entraînement, comprenant un corps (10) de soupape ayant au moins deux raccords (A, P, T) pour du fluide, un dispositif de commande pour déplacer un piston (12) de réglage entre les diverses positions de réglage, et un dispositif constitué du piston (12) de réglage, qui est guidé avec possibilité de se déplacer longitudinalement dans le corps (10), lequel a au moins deux points (A, P, T) de raccordement pour du fluide, et qui coopère avec un bord (56) de commande, suivant une fonction en escalier, du corps (10) en un point (P) de raccordement, de l'alimentation en pression, laquelle alimente en une pression pouvant être donnée à l'avance en fluide en passant par une communication fluidique, un autre point (A) de raccordement, servant de raccordement utile, dans des positions de régulation du piston (12) de réglage et cherche ainsi à tirer, en raison des forces d'écoulement, qui se produisent, en direction d'une position de fermeture barrant la communication fluidique, dans laquelle, pour une compensation de la force d'écoulement, le piston (12) de réglage a, dans la partie du bord (56) de commande du corps (10), une modification (60) de forme de sa forme de base extérieure, qu'il a par ailleurs, de manière à ménager une surface d'attaque d'écoulement pour du fluide, qui provoque, sur le piston (12) de réglage, une application de force de compensation antagoniste de la force d'écoulement, application qui tend à tirer le piston (12) de réglage dans une position d'ouverture opposée à la position de barrage,
dans laquelle
un premier ressort (16) de compression s'appuie par son extrémité libre sur le piston (12) de réglage,
**caractérisée**
**en ce que** le piston (12) de réglage est foré creux à cette extrémité, et **en ce que** la modification (60) de forme suit de la même façon une fonction en escalier, dont le graphe fonctionnel a au moins un degré de plus que le nombre de degrés nécessaire pour la formation du bord (56) de commande.

2. Soupape de réglage de la pression proportionnelle suivant la revendication 1, **caractérisée en ce que** le degré respectif du piston (12) de réglage forme une surface (62, 64, 66) annulaire, qui s'étend concentriquement à l'axe (R) longitudinal du piston (12) réglage ainsi que perpendiculairement à celui-ci.

3. Soupape de réglage de la pression proportionnelle suivant la revendication 1 ou 2, **caractérisée en ce que** les diverses surfaces (62, 64, 66) annulaires voisines des degrés du piston (12) de réglage sont à distance les unes des autres par des surfaces (68, 70) d'interruption, qui s'étendent concentriquement à l'axe (R) longitudinal ainsi que parallèlement à celui-ci.

4. Soupape de réglage de la pression proportionnelle suivant l'une des revendications précédentes, **caractérisée en ce que** la surface (62, 64, 66) annulaire respective est, considéré dans la direction du pourtour extérieur du piston (12) de réglage, inférieure ou égale aux surfaces (62, 64, 66) annulaires s'y rattachant respectivement dans l'intérieur.

5. Soupape de réglage de la pression proportionnelle suivant l'une des revendications précédentes, **caractérisée en ce que** la surface (68, 70) d'interruption a, considéré dans une direction du pourtour extérieur du piston (12) de réglage, parallèlement à l'axe (R) longitudinal de celui-ci, une hauteur plus petite ou égale à la surface (82) d'interruption se trouvant le plus à l'intérieur.

6. Soupape de réglage de la pression proportionnelle suivant l'une des revendications précédentes, **caractérisée en ce que**, lorsqu'il y a plus que deux degrés du graphe fonctionnel, la surface (68) d'interruption disposée le plus à l'extérieur du piston (12) de réglage, suit une surface (70) d'interruption de même hauteur pour un degré.

7. Soupape de réglage de la pression proportionnelle suivant l'une des revendications précédentes, **caractérisée en ce que** la surface (82) d'interruption disposée la plus à l'intérieur sur le piston (12) de réglage, se transforme en au moins un point (44) de passage de fluide dans le piston (12) de réglage.

8. Soupape de réglage de la pression proportionnelle suivant l'une des revendications précédentes, **caractérisée en ce que** le degré, pour la formation du bord (56) de commande pour un raccord (P), d'alimentation en pression, est formé par un point de transition entre au moins un point (74) de passage associé dans le corps (10) et la paroi (76) intérieure de ce corps (10), le long de laquelle le piston (12) de réglage est guidé avec possibilité de se déplacer.

9. Soupape de réglage de la pression proportionnelle suivant la revendication 8, **caractérisée en ce que**, dans la direction de commande du piston (12) de réglage pour la fermeture du point (74) respectif de passage avec l'arête (56) de commande, considéré dans sa direction de déplacement, dans cette direction de l'extérieur à l'intérieur, la suite en escalier du bord (56) de commande et la modification (60) de forme du piston (12) de réglage est croissante et est décroissante, considéré dans le sens de déplacement contraire de l'intérieur vers l'extérieur.

10. Soupape de réglage de la pression proportionnelle suivant l'une des revendications précédentes, **caractérisée en ce que** les degrés de la modification (60) de forme du piston (12) de réglage débouchent dans un évidement (78) intérieur sur le pourtour extérieur du piston (12) de réglage, évidement qui débouche à l'extrémité opposée dans un autre degré (80), qui coopère avec un bord (58) de commande d'un raccord (T) de réservoir.

11. Soupape de réglage de la pression proportionnelle suivant la revendication 10, **caractérisée en ce que** le bord (58) de commande au raccord (T) de réservoir est formé par au moins un point (72) de passage associé dans le corps (10) de la soupape.

12. Soupape de réglage de la pression proportionnelle suivant la revendication 10 ou 11, **caractérisée en ce que** la longueur de l'évidement (78) intérieur, considéré parallèlement à l'axe (R) longitudinal du piston (12) de réglage, correspond à la distance directe entre deux bords (56, 58) de commande voisins du raccord (P) d'alimentation en pression et du raccord (T) de réservoir.

13. Soupape de réglage de la pression proportionnelle suivant l'une des revendications 10 à 12, **caractérisée en ce que**, dans l'évidement (78) intérieur sur le piston (12) de réglage, débouche au moins un autre point (42) de passage de fluide, qui, par l'intermédiaire d'un évidement (40) médian du piston (12) de réglage, est en communication fluidique avec le au moins un point (44) de passage de fluide dans celui-ci.

14. Soupape de réglage de la pression proportionnelle suivant la revendication 13, **caractérisée en ce qu'**à l'autre point (42) respectif de passage de fluide, est raccordé un dispositif (52) d'écran dans le piston (12) de réglage, qui relie à communication fluidique permanente l'évidement (40) médian du piston (12) de réglage, qui est raccordé au raccord (A) utile du corps (10) de la soupape à un autre évidement (48) médian du piston (12) de réglage, dans lequel pénètre au moins en partie un dispositif de commande du piston (12) de réglage.

15. Soupape de réglage de la pression proportionnelle suivant l'une des revendications 10 à 14, **caractérisée en ce que** le piston (12) de réglage a, à l'extérieur de l'évidement (78) intérieur et de la modification (60) de forme avec la fonction en escalier, un même diamètre extérieur, qui est interrompu, de préférence, par des bandes introduites d'étanchéité et/ou de guidage.
